# EUROPEAN PATENT SPECIFICATION

(11) **EP 4 220 461 B1**
(45) Date of publication and mention of the grant of the patent: **27.05.2026**
(21) Application number: 23153309.2
(22) Date of filing: 25.01.2023
(51) Int. Cl.: G06F 21/57, G06F 21/51, G06F 21/64

(54) **ACCELERATED SECURE BOOT FOR EMBEDDED CONTROLLERS**
BESCHLEUNIGTER SICHERER START FÜR EINGEBETTETE STEUERGERÄTE
AMORÇAGE SÉCURISÉ ACCÉLÉRÉ POUR CONTRÔLEURS INTÉGRÉS

(30) Priority: 01.02.2022 US 202263267425 P; 13.01.2023 US 202318154667
(43) Date of publication of application: 02.08.2023
(73) Proprietor: Aptiv Technologies AG, 8200 Schaffhausen (CH)
(72) Inventor: LANGENBACH, Julie, 57482 Wenden (DE); KRAMER, Matthias, 50937 Köln (DE)
(74) Representative: Lewis Silkin LLP

(56) References cited:
- US-A1- 2016 306 976
- US-A1- 2019 266 331
- US-A1- 2021 232 691

## Description

### TECHNICAL FIELD

This disclosure relates to secure boot of embedded controllers that provide computing functions for vehicles, appliances, and other embedded systems.

### BACKGROUND

Microcontrollers and other processing components are commonly embedded in a wide variety of applications. As computer technology advances, its adoption for use in automotive applications is desired. Vehicles are relying, with greater prevalence, on more complex computer-based automation and control, which may improve safety and make driving easier. Some advanced driving assistance systems (ADAS) are implemented using emerging technology (e.g., system on chips, processing units, programmable hardware) developed for information technology (IT), mobile communications, and other industries. These emerging technologies may provide sufficient computing power to accomplish vehicle tasks; however, they may also impact security and/or reliability because of unforeseen vulnerabilities they introduce into a vehicle system.

US 2016/306976 discloses a method wherein a first time software is loaded for execution by a device, the software stored in non-secure storage is authenticated. Authenticating the software may involve a cryptographic operation over the software and a digital signature of the software. A verification tag may be generated for the software if authentication of the software is successful, the verification tag based on the software and at least a device-specific secret data. The verification tag may be stored within the device. Each subsequent time the software is loaded for execution it may be verified (not authenticated) by using the verification tag to confirm that the software being loaded is the same as the one used to generate the verification tag while avoiding authentication of the software.

US 2019/266331 discloses a Dynamic Trust Manager (DTM) having an interface coupled to an embedded system including an Application Processor (AP), boot media, and security processor. The security processor, at a start of a boot sequence of the AP, prevents the AP from proceeding with the boot sequence, verifies bootloader code stored in the boot media via boot media access, and if the bootloader code verification is successful, allows the AP to proceed using the verified bootloader code. The security processor may also be configured to activate an interrupt request of the AP during runtime, request the AP to execute a Security Monitor Driver (SMD) of the embedded system to measure an integrity information of code/data stored in an embedded system memory, receive from the SMD the measured integrity information of code/data, and verify whether the measured integrity information equals a reference integrity information stored in an integrity table of a DTM memory.

### SUMMARY

This Summary introduces simplified concepts related to accelerated secure boot for embedded controllers of vehicles and other embedded systems, as further described in the Detailed Description and conveyed by the Drawings. Security is maintained by keeping secret, on the device or vehicle, which portions of a software unit are to be used to satisfy an accelerated integrity check. A derivable, pseudo-random number generator based map of these elements may be employed, which is neither predictable nor discoverable. Further measures may be taken even if the secrets are compromised so the accelerated secure boot cannot be deceived on subsequent reboots. Boot time of an embedded system is shorter; the amount of software needing checked by the accelerated secure boot is less than a normal secure boot by a factor of eight or more, which strongly accelerates the process. Emerging technologies may be easier adopted for use as embedded controllers and other computer systems that have fast start-up requirements.

Examples of the invention are defined by the independent claims to which reference should be made. Preferable features are set out in the dependent claims. In one example, a method includes generating a vehicle/device signature based on a portion of a baselined version of a software unit installed on a device of a vehicle, and prior to executing a current version of the software unit installed on the device, checking integrity of the current version. The current version integrity checking is performed by: identifying the portion of the baselined version used to generate the vehicle/device signature; and determining a current signature for a portion of the current version of the software unit corresponding to the portion of the baseline version used to generate the vehicle/device signature. The method further includes executing the software unit on the device when the current signature matches the vehicle/device signature.

In another example, a system includes at least one processor configured to perform the above-summarized method and other methods set forth herein. Also described is a system comprising means for performing the above-summarized method and other methods set forth herein, a non-transitory computer-readable medium such as computer-readable storage media comprising instructions that, when executed, cause at least one processor to perform the above-summarized method and other methods set forth herein. A computer software product may be configured to execute on computer hardware to cause the computer hardware to perform the above-summarized method and other methods set forth herein.

Although primarily described in the context of embedded controllers for an automobile, the techniques for enabling accelerated secure boot for embedded controllers, as described herein, may be applied to other applications where security and reliability are as important as processing speed, such as other vehicles including airplanes and marine craft, and other embedded systems.

### BRIEF DESCRIPTION OF THE DRAWINGS

The details of one or more aspects of accelerated secure boot for embedded controllers are described in this document with reference to the Drawings, in which same numbers are used throughout the figures to indicate like components, and which are briefly described as follows:
FIG. 1 illustrates a diagram of an environment of a vehicle configured to perform an accelerated secure boot for embedded controllers of the vehicle, in accordance with techniques of this disclosure;
FIGS. 2-1 and 2-2 illustrate diagrams of software or firmware undergoing normal secure boot and an accelerated secure boot for embedded controllers, in accordance with techniques of this disclosure;
FIGS. 3-1 and 3-2 illustrate diagrams of a normal secure boot and an accelerated secure boot for embedded controllers, in accordance with techniques of this disclosure; and
FIGS. 4 and 5 illustrate flow charts of processes for performing accelerated secure boot for embedded controllers, in accordance with techniques of this disclosure.

### DETAILED DESCRIPTION

Existing computer equipment in vehicles is insufficient to handle certain advanced driving and safety (ADAS) tasks. For example, autonomous driving tasks involve processing large amounts of sensor data to control a vehicle. Increasing speed and precision of self-driving and driver-assist tasks may, therefore, improve safety and passenger comfort. Sometimes, emerging technologies are repurposed for vehicle-use to increase processing speed. Due to economies of scale, some of the fastest processing technology is developed for use in mobile computing, gaming, or information technology (IT). When vehicles and other safety critical applications depend on these components, new vulnerabilities may be introduced that diminish reliability and security. For example, an unused network interface or interface for Internet of Things (IoT) connectivity causes a device to be vulnerable to security breaches, which if occur may affect operation or control of the vehicle, and risks the safety of passengers, pedestrians, and other vehicles. Cybersecurity measures may be desired to ensure integrity of vehicle computer systems to provide safe operation on roads.

One way to secure software or firmware executing in a vehicle computer system is by authenticating to a trusted source prior to execution. Secure boot processes ensure integrity of software or firmware so malicious or corrupted code cannot cause unexpected operations to a device. A normal secure boot process requires each software unit (e.g., bootloader, application) to be signed by a developer, an original equipment manufacturer (OEM), or other trusted source, using a private key and a cryptographic signature process. In asymmetric signature algorithms, e.g., an Elliptic Curve Cryptography (ECC) or Rivest-Shamir-Adleman (RSA) based, a key pair consisting of a private key and a public key is used. In contrast, symmetric signature algorithms, including Message Authentication Code (MAC) based, a single secret key is used. For signature calculations, all elements (e.g., bits, bytes) of a software unit are checked by an unchangeable root of trust. Special code executes on-device prior to executing each software unit that acts as the root of trust for the software unit by checking the first unit and launching it. Then that software unit can check and launch the next software unit, and so on. The signature applied to each software unit is compared against a signature determined with a corresponding public key and each element of the software unit's machine-readable code. An OEM may load a factory installation of a software unit, or a software update, into an ADAS computer system. At initial boot, after factory installation or after an update, the computer system executes a normal secure boot process. This ensures that each software unit is baselined to a secure state before a device or vehicle is delivered.

As software units evolve to become larger and more complex, latency of the normal secure boot process reaches unacceptable levels for on-vehicle use, due in large part because every element is evaluated during the integrity check. A signature check on a large piece of software requires a lot of computations that may take a long time to finish executing on a vehicle computer system. Without causing inconvenience, a highly automated driving routine, for example, is too large to be checked using a normal secure boot processes whenever a vehicle restarts. Occupants expect a vehicle to be operational and ready to drive as soon as it is started. Skipping secure boot altogether risks causing a computer malfunction, which poses safety concerns and may lead to user dissatisfaction and lead to less adoption of vehicle technology.

To speed up start times securely, and without executing a normal secure boot process, an accelerated secure boot is described in which the amount of software that is signed with a cryptographic algorithm and needing to be checked is reduced, with care taken to not jeopardize security of the integrity check. It should be noted that a normal secure boot process is not a necessary condition for establishing a baseline software load or for executing an accelerated boot process described herein. A normal secure boot process may be replaced entirely by an accelerated secure boot process, if certain parameters to enable the accelerated secure boot functionality are initialized in response to establishing a baselined software unit, as is described below.

Described herein is an accelerated secure boot for embedded controllers and other embedded systems. Each reboot of a device may occur faster than a normal secure boot because only some elements of the software unit need to be checked to confirm integrity from one restart to the next. To execute accelerated secure boot, a unit signature (e.g., device specific, vehicle specific) is determined prior (e.g., a using a private key, a secret key or MAC) to initializing and enabling the accelerated secure boot. For example, the unit signature is determined during a one-time, normal secure boot of the software unit. The unit signature can be determined outside of a secure boot environment, for example, when reprogramming a computer system under a controlled environment. A software update may cause a change or initialization of the unit signature. The only condition to using accelerated secure boot, however, may be that any unit signature be available from a non-volatile memory of the device or vehicle in which the software unit is being tested. Whether accelerated secure boot can verify integrity of the software unit, however, may depend on a correct unit signature being maintained securely such that a current signature determination can be used during that instance of the accelerated secure boot to verify integrity of the entire software unit.

For example, after a software update or following an initial installation, the normal secure boot process is executed to verify authenticity and integrity of each software unit to establish a baseline for checking integrity on a future boot cycle. During the normal secure boot, and after verifying that the signature applied to the software unit is from a trusted source, a pseudo-random number generator (PRNG) can be used to select which elements of a software unit are to be checked during an accelerated secure boot. A PRNG returns a same sequence of random numbers every time a particular start value or seed is used as input.

To enable accelerated secure boot, a special code segment (e.g., startup code, bootloader, parent application) relies on a PRNG seed to be the start value for the PRNG. The PRNG is configured output a value that represents a mapping to the same fragment of the current version of the software unit used to generate the signature from the baseline. The PRNG seed may be unique to each vehicle or device and cause the PRNG of each vehicle or device to produce a unique signature for each of the different devices and/or vehicles. The PRNG used to generate the device or vehicle signature may itself be a same PRNG component (e.g., based on identical number generator algorithms) being used across different vehicles and/or across different devices on one vehicle. A different PRNG component can also be used across different devices on a single vehicle (e.g., to group these devices into a common security class). A hardware security module (HSM) operating on that vehicle may be used to preserve the PRNG seeds and other PRNG parameters that enable the different PRNG components being used across a group of different devices. Unique PRNG seeds and other parameters for the PRNG components in that group of device may be securely stored (e.g., by the vehicle HSM) to maintain secrecy on the vehicle between the different devices or device groups, which may enable additional levels of security to be achieved between different devices and/or device groups that exist one or more vehicles. Nevertheless, the unit signature is checked during the accelerated secure boot using a corresponding PRNG seed input to the PRNG, to first produce a numerical mapping to the same fragmented portion of the software unit that is used to initialize the accelerated secure boot and initially generate the unit signature. With the mapping, the unit signature can be determined from the fragmented portion being tested to determine any differences with the expected unit signature obtained from memory.

The unit signature may be determined using an asymmetric private key or determined from a symmetric key, such as a message authentication code (MAC) generated based on an advanced encryption standard (AES). As mentioned, the unit signature or second MAC is unique to the device and/or the vehicle that is executing the unit being checked. Care is taken to preserve the unit signature in non-volatile memory to be reused during startup of each accelerated secure boot cycle. For example, a vehicle HSM may preserve the unit signature in secure memory on the vehicle, which may be external to the device associated with that unit signature. Secure, non-volatile memory portions of a device may be used to preserve a unit signature for that device. Various options are described below to maintain security overtime by updating or changing the unit signature from time to time (e.g., from one or more accelerated secure boots to the next, at regular intervals, each hour, each day). This way, on subsequent reboots of the same software unit, normal secure boot is skipped, and the accelerated secure boot is executed instead.

The secure memory does, however, necessarily at least include the PRNG seed used to generate the unit signature. The PRNG seed is kept secret on the secure memory to preserve security of the accelerated secure boot, to prevent discovery of elements of a software unit needed to pass an integrity check. By preserving the PRNG seed, with or without the unit signature, the identities of the elements used to determine the unit signature itself are not discoverable, and a higher degree of security is achieved. A result of the PRNG is used during the accelerated secure boot to secretly map to the same set of individual elements that are selected during initialization (e.g., during software installation, during software update, during a normal secure boot, a previous accelerated secure boot) to calculate the unit signature. Integrity of the entire software unit is therefore verifiable to a high degree of certainty, faster than executing a normal secure boot, simply by comparing the unit signature calculated from the PRNG mapping to the unit signature maintained in the non-volatile (secure or unsecure) memory of the device.

By calculating the unit signature based only on some elements and not all the elements, this check occurs drastically faster because far less of each software unit is checked, when compared to the normal secure boot, and without diminishing security. Even if a hacker is able (e.g., using brute force) to obtain the unit signature, the PRNG seed, and/or the set of elements being checked, that information is not useful for any other device or any other vehicle. To further enhance security in case the secret PRNG seed or the unit signature are compromised, the PRNG seed may be changed from one accelerated secure boot to the next (e.g., incrementally, temporally).

This way, accelerate secure boot as described herein may shorten boot time of an embedded system to satisfy even some of the fastest boot requirements. Emerging technologies developed for other industries may be easier adopted in vehicles and other embedded systems with fast start-up requirements.

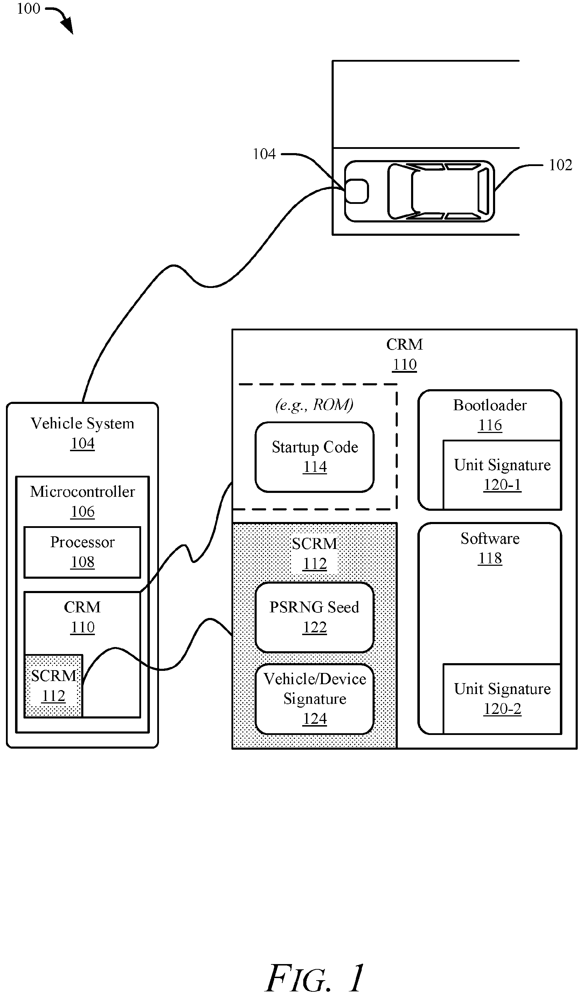

FIG. 1 illustrates an example environment 100 of a vehicle 102 that, in accordance with techniques of this disclosure, is configured to perform an accelerated secure boot for embedded controllers. The vehicle 102 includes a vehicle system 104 configured to perform a task (e.g., a driving function). For example, the vehicle system 104 may be a radar or other perception system configured to detect objects in and around the vehicle 102. The vehicle system 104 may be another component of the vehicle, such as an ADAS system, an engine or drivetrain system, an electrical system, an electro-mechanical system, or other system of the vehicle 102.

The vehicle system 104 includes a microcontroller 106, which may also be referred to as a control unit, an engine control unit (ECU), an embedded system, a system on chip, or computer. The microcontroller 106 includes a processor 108 configured to execute instructions. The processor may be a central processing unit (CPU), graphics processing unit (GPU), or another device. Executable instructions, and related data, may be stored on computer-readable storage media (CRM) 110 of the microcontroller 106. The processor 108 may load and execute the instructions and related data stored by the CRM 110 as firmware, software, or a combination thereof.

Startup code 114 is an example instruction and data block stored by the CRM 110. Often contained in static (read only) portion of the CRM 110, the startup code 114 is a root of trust that is executed before any other software is loaded or executed by the processor 108. Functions of the startup code 114 include managing an accelerated secure boot process for a bootloader 116 to ensure the microcontroller 106 is executing an authentic copy of the bootloader 116 using authentic data.

The bootloader 116 and software 118 are further example data and instruction sets stored by the CRM 110. The bootloader 116 and/or the software 118 may be firmware, software, or a combination thereof. Stored in dynamic (read-writeable) portions of the CRM 110, the bootloader 116 initializes the processor 108 with locations to data and the start of executable instructions of the software 118. Functions of the bootloader 116 include managing applications through the accelerated secure boot process to ensure the microcontroller 106 is executing authentic copies of the software and using authentic data.

The processor 108 executes the software 118 to enable the microcontroller 106 to perform various tasks of the vehicle system 104. The bootloader 116 and the software 118 are signed with respective unit signatures 120-1 and 120-2, which are determined using a same private key in an asymmetric example or determined to be a shared secret key for symmetric examples. An asymmetric or symmetric cryptographic signature algorithm may be used. A symmetric algorithm may produce a shared secret key as a MAC. An asymmetric algorithm, such as an Elliptical Curve Digital Signature Algorithm (ECDSA), may produce an ECD. A type of cryptographic signature algorithm is chosen depending on a particular application.

In the example of FIG. 1, these unit signatures 120-1 and 120-2 are used by the startup code 114 and the bootloader 116, respectively, during a normal secure boot process to ensure that each is an authentic version and not corrupted (e.g., does not include malicious code). The startup code 114 checks every element of the bootloader 116 and the bootloader 116 checks every element of the software 118, each for generating a comparative signature (or comparative MAC) that can be compared against one of the respective unit signatures 120-1 and 120-2.

The CRM 110 may further include a secure portion, shown as a secure CRM (SCRM) 112. The SCRM 112 is non-volatile and isolated from the rest of the CRM 110 and may be on a separate storage media or separate storage device from the CRM 110. Physical and/or virtual isolation between the SCRM 112 and the CRM 110 prevents corrupted versions of the software 118 and/or the bootloader 116 from compromising any secret information stored on the SCRM 112. For example, access to the secret information maintained at the SCRM 112 is restricted, and only available to special code in the startup code 114, the bootloader, or the software 118, during a normal or an accelerated secure boot. In this example, the SCRM 112 of the microcontroller 106 maintains a PRNG seed 122 to a PRNG, in addition to maintaining a vehicle/device signature 124. The startup code 114 initializes the PRNG seed 122 and the vehicle/device signature 124 on the SCRM 112 during the normal secure boot for the bootloader 116. In other examples, the PRNG seed 122 and the vehicle/device signature 124 are generated outside a secure boot process, for instance, during an initial flash of system memory, during a software update, or in response to installing a patch or otherwise altering a baselined (e.g., previously checked) software units. The bootloader 116 may initialize the PRNG seed 122 and the vehicle/device signature 124 on the SCRM 112 during the normal secure boot for the software 118 or, again, these may be established outside the normal secure boot. The PRNG seed 122 and the vehicle/device signature 124 are used during the accelerated secure boot to verify integrity of the entire software unit, without checking every element. The startup code 114, the bootloader 116, or the software 118 may even modify the PRNG seed from one accelerated secure boot to the next to provide an additional layer of security.

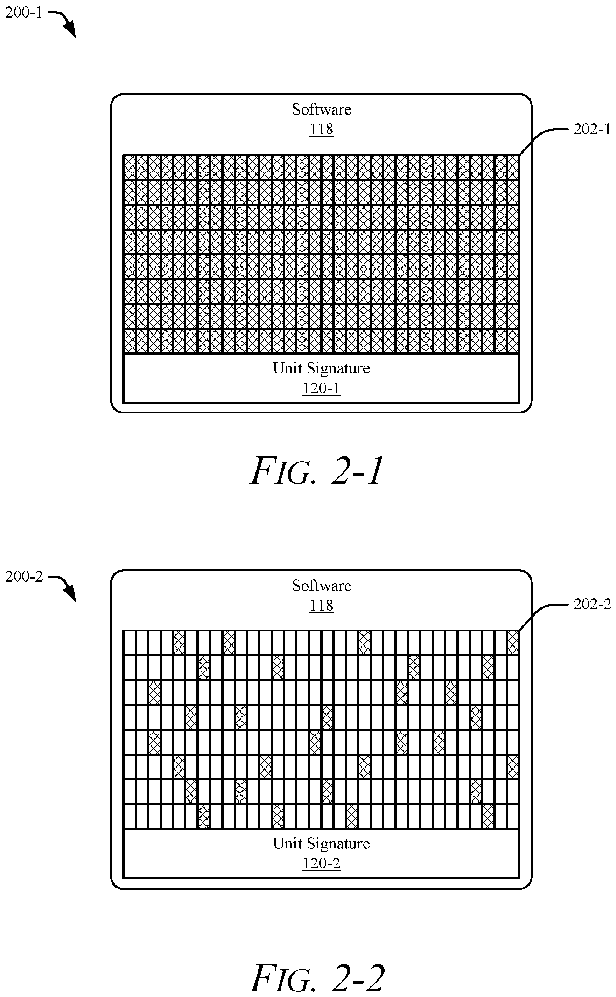

FIGS. 2-1 and 2-2 illustrate diagrams of software or firmware undergoing normal secure boot in comparison to accelerated secure boot for embedded controllers, in accordance with techniques of this disclosure. In FIGS. 2-1 and 2-2, the software 118 is illustrated, however, the bootloader 116 or other software unit may be verified using similar techniques.

In FIG. 2-1, during a normal secure boot, special code in the bootloader 116 causes the processor 108 to authenticate the software 118 by comparing the unit signature 120-2 applied to the software 118, with a signature determined by an encryption algorithm, which utilizes every element of executable code and data 202-1. That is, the executable code and data 202-1 includes all instructions and related data necessary for the processor 108 to execute all the functions of the software 118. In FIG. 2-1, to indicate that the entire software unit 202-1 is being analyzed by the special code of the bootloader 116 during the normal secure boot, each logical portion of the software unit 202-1 is highlighted with a pattern fill.

In contrast, as shown in FIG. 2-2, during each accelerated secure boot, the bootloader 116 activates special code that causes the processor 108 to analyze only a portion of the software 118, which may be fragmented set of partial instructions and data. The special code of the bootloader 116 is configured to verify integrity through analyzing executable code and data 202-2, which represents only a fraction of the executable code and data 202-1. The executable code and data 202-2 is highlighted in FIG. 2-2 with a fragmented pattern fill to indicate that only a random, fragmented selection of logical blocks of the software 118 are analyzed during the accelerated secure boot. As such, the bootloader 116 may complete an accelerated secure boot that checks the software 118 faster than the bootloader 116 can during the normal secure boot process, without relaxing security.

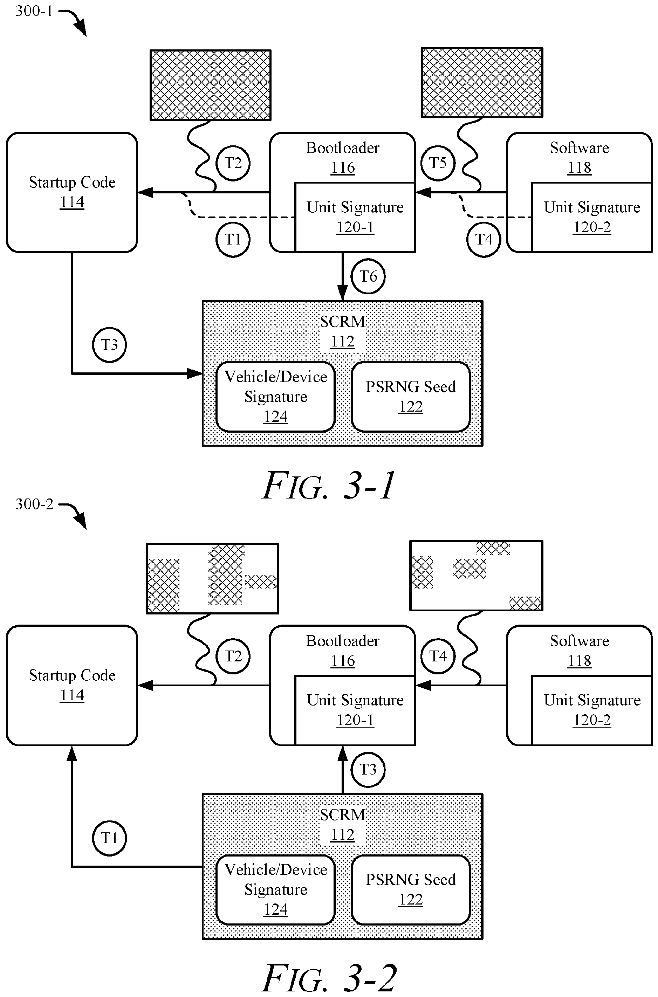

FIGS. 3-1 and 3-2 illustrate diagrams of two different secure boot processes for embedded controllers, in accordance with techniques of this disclosure. During initial programming or after a software or firmware update, the vehicle system 104 may execute a normal secure boot process or an accelerated secure boot process that checks whether the software 118 and the bootloader 116 on the CRM 110 is authentic. The normal secure boot process may execute immediately. However, an accelerated secure boot process cannot execute until an initialization of certain parameters occur. The initialization may occur during or following an update to the bootloader 116 or the software 118, following a normal secure boot process, or after a factory installation, software update, or other reinitialization of the bootloader 116 and/or the software 118. The normal secure boot or the accelerated secure boot can execute interchangeably any time a software unit is changed. The following example is described as if a normal secure boot is followed by an accelerated secure boot, to demonstrate differences in the two processes. This description does not imply that the accelerated secure boot process is conditioned on completion of a normal secure boot.

In FIG. 3-1, the normal secure boot is shown to start at time T1; special authentication code of the startup code 114 obtains the unit signature 120-1 applied to the bootloader 116 from the CRM 110. An OEM or other software developer signs the bootloader 116 using a unit (e.g., vehicle/device) signature determined using a private key, or set to a secret key, and from applying a cryptographic algorithm that uses the entire bootloader 116 as a basis for the unit signature determination. At time T2, the startup code 114 checks the bootloader 116 stored on the CRM 110 against the unit signature 120-1 retrieved at time T1 by performing a standard signature check (e.g., using a corresponding public key or the same secret key) against all logical units (e.g., bytes, bits) of the bootloader 116. At time T3, after verifying the bootloader 116 in a normal secure boot way, the startup code 114 may be configured to record, at the SCRM 112, the PRNG seed 122 for the bootloader 116 and the vehicle/device signature 124 for the bootloader 116, which is determined from applying a cryptographic algorithm to elements of the bootloader 116 that map to the output of a PRNG after inputting the PRNG seed 122. In other examples, because startup code is typically difficult to change or customize, the PRNG seed 122 is determined outside the startup code 114, e.g., when the bootloader 116 is installed an installation manager may set the SCRM 112 to the correct PRNG seed.

Next, at time T4, the bootloader 116 retrieves the unit signature 120-2 of the software 118 from the CRM 110. The OEM or other software developer signs the software 118 using the same private key or same secret key and cryptographic algorithm used for the bootloader 116, and by using the entire software 118 as a basis. At time T5, the bootloader 116 checks all elements of the software 118 against the unit signature 120-2 retrieved at time T4 in a standard, secure manner, and in a similar way the bootloader 116 is checked by the startup code 114. For example, using the corresponding public or the same secret key, the bootloader 116 compares a signature determined using all logical units (e.g., bytes, bits) of the software 118 against the unit signature 120-2 applied to the software 118. At time T6, after verifying the software 118 in a normal secure boot way, special code of the bootloader 116 records, at the SCRM 112, the PRNG seed 122 for the software 118 and the vehicle/device signature 124 for the software 118. As mentioned above, this step is not necessarily performed by the bootloader 116 or during the normal secure boot process. Instead, the PRNG seed 122 may be determined outside the bootloader 116, e.g., when the bootloader 116 or the software 118 are installed an installation manager may set the SCRM 112 to the correct PRNG seed. The vehicle/device signature 124 is determined from applying a cryptographic algorithm to elements of the software 118 that map to the output of a PRNG after inputting the PRNG seed 122. For simplicity of the drawings, subsequent authentications performed by the software 118 are omitted. Although, it should be understood that the startup code 114, the bootloader 116, the software 118, or other system may enact similar special code for activating accelerated secure boot. Accelerated secure boot is considered enabled when the vehicle/device signature 124 and/or the PRNG seed 122 are established in the SCRM 112, no matter the process or actor used.

In this example, the PRNG seed 122 and the vehicle/device signature 124 are maintained on the SCRM 112. The vehicle/device signature 124 may be determined using a PRNG to produce a selection of elements of a software unit that are to be checked next time, i.e., during the accelerated secure boot process. For example, a PRNG seed 122 may be input to the PRNG to obtain an encoded indication of which elements are associated with the executable code and data 202-2. The vehicle/device signature 124 represents a result of a cryptographic algorithm that is applied, on-device, to the executable code and data 202-2 and stored in SCRM 112. The selection of elements (e.g., bits, bytes) used to calculate the vehicle/device signature 124 is to have a distance or separation between elements that is small enough to prevent insertion of malicious code between them. The vehicle/device signature 124 and the PRNG seed 122 are maintained in the SCRM 112, from where they are accessed whenever accelerated secure boot is performed. Care is taken so the PRNG seed 122 and the vehicle/device signature 124 are unknown outside the vehicle.

FIG. 3-2 illustrates operations of the startup code 114 and the bootloader 116 during accelerated secure boot. In some systems, the startup code 114 cannot perform an accelerated boot process, and only the bootloader 116 and/or the software 118 can execute the accelerated boot process. However, for completeness, the startup code 114 is shown executing an accelerated secure boot in addition to the bootloader 116.

During accelerated secure boot, the vehicle/device signature 124 is recalculated from evaluating the same portion of a software unit that is checked during the normal secure boot. At time T1, the PRNG seed 122 may be read from the SCRM 112 and input to a PRNG to reproduce the encoded indication of which elements are associated with the bootloader 116. At time T2, from checking a fraction of the elements of the bootloader 116, a current signature can be determined for the bootloader 116. This current signature is compared with the vehicle/device signature 124 retrieved from the SCRM 112 at time T1, which match if the bootloader 116 is not corrupted. If the vehicle/device signature 124 stored in the SCRM 112 is the same as current signature determined at time T2, the startup code 114 determines that the bootloader 116 is trustworthy and allows its execution on the processor 108. If the current signature determined at time T2 is different than the vehicle/device signature 124 stored in the SCRM 112, the startup code 114 determines that the bootloader 116 is not trustworthy and prevents its execution on the processor 108. In some cases, to enable operation of the vehicle 102, the startup code 114 may revert to a previous version of the bootloader 116 that last passed a security check and cause it to execute instead of the version that failed. Because only a portion of the bootloader 116 is checked during accelerated secure boot, the bootloader 116 may be verified faster than the normal secure boot.

For verifying trustworthiness of the software 118, at time T3, the PRNG seed 122 may be read from the SCRM 112 and input to a PRNG to reproduce the encoded indication of which elements are associated with the software 118. At time T4, from checking a fraction of the elements of the software 118, a current signature may be determined for the software 118. This current signature is compared with the vehicle/device signature 124 retrieved from the SCRM 112 at time T3, which match if the software 118 is not corrupted. If the vehicle/device signature 124 stored in the SCRM 112 is the same as the current signature calculated at time T4, the bootloader 116 determines that the software 118 is trustworthy and allows its execution on the processor 108. If the signature determined at time T4 is different than the vehicle/device signature 124 stored in the SCRM 112, the bootloader 116 determines that the software 118 is not trustworthy and prevents its execution on the processor 108. In some cases, to enable operation of the vehicle 102, the vehicle 102 may revert to a previous version of a software unit that last passed a security check and cause it to execute on the vehicle 102 instead of the version that failed. Because only a portion of the software 118 is checked during accelerated secure boot, the software 118 can be verified faster than the normal secure boot.

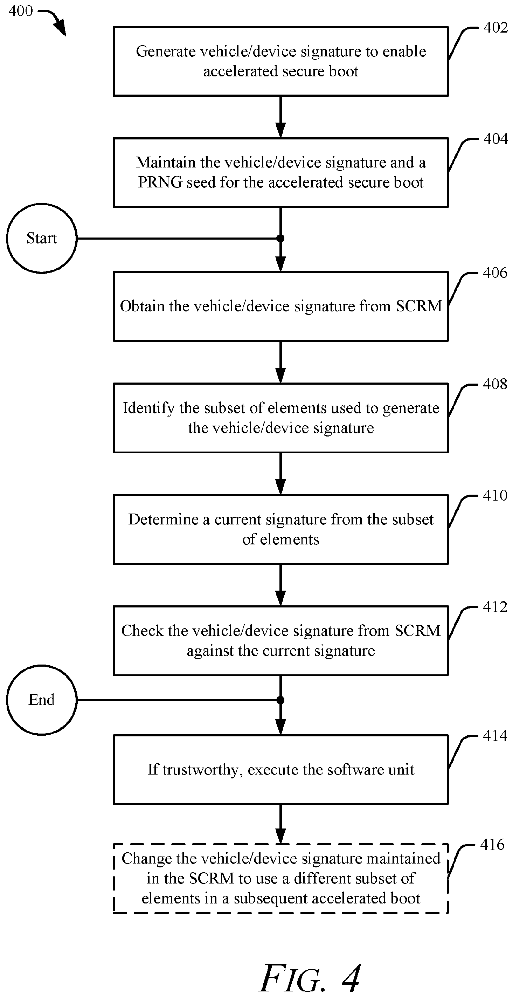

FIG. 4 illustrates a flow chart of a process 400 for performing accelerated secure boot for embedded controllers, in accordance with techniques of this disclosure. The process 400 may be performed by the startup code 114, the bootloader 116, the software 118, or a combination thereof, e.g., when executed by the processor 108 of the microcontroller 106. The steps of the process 400 may be repeated, rearranged, omitted, or otherwise modified depending on application. For ease of description, the process 400 is performed in the context of elements of FIGS. 1, 2-1, 2-2, 3-1, and 3-2. For ease of description, the process 400 is described in the context of actions performed by the bootloader 116 to verify the software 118.

Rather than checking the unit signature applied to the software unit, as is done during the normal secure boot, at step 402, the process 400 a vehicle/device signature used to check integrity of current versions of a software unit installed on a device is generated from a portion of a baselined version of the software unit. For example, accelerated secure boot process is enabled by generating a vehicle/device signature based on a subset of all elements of a baselined version of the software unit to be checked. The subset of elements may be selected using a PRNG that receives the PRNG seed 122 as input and outputs an encoded bit or byte map as a result. For example, to generate the vehicle/device signature 124, the bootloader 116 can execute an AES algorithm using elements of a subset of the software 118 as input to generate a MAC. A PRNG on the vehicle 102 is configured to produce an encoded map to the subset of elements based on an input of the PRNG seed 122. The PRNG seed 122 may be initialized when the software 118 is baselined on the vehicle 102. In some examples, the portion of the baselined version that is used to generate the vehicle/device signature 124 includes a baselined elementwise-map of fragments to only some data and instructions of the software unit that are loaded on the device as part of the baselined version. The same portion of the current version that is used to determine the current signature includes a current elementwise-map of fragments to same data and instructions loaded on the device for the current version. Said differently, the portion of the baselined version that is used to generate the vehicle/device signature 124 at the step 402 includes corresponding data and instructions for the software unit 118 as used at subsequent steps 408 and 410, in reference to the same portion of the current version for the software unit 118 used to ultimately determine the current signature. The corresponding portions of the baselined version and the current version each include only some of all the fragments of data and instructions for the software unit 118. That is, an accelerated integrity check can be performed at step 412 based on evaluations (e.g., in other steps of the process 400 prior to the step 412) of only a fraction of all the data and/or instructions included in the software 118.

At step 404, the vehicle/device signature and the seed value are maintained in a secure portion of memory. The secure portion is isolated from other memory portions where the baselined version or the current version are maintained. For instance, the vehicle/device signature 124 is maintained securely (e.g., in a secure portion of non-volatile memory of the device or the vehicle, at the SCRM 112) with the PRNG seed 122 for use in deriving which portions of the software unit to check during the accelerated secure boot processes. The PRNG seed 122 and/or the vehicle/device signature 124 are maintained on the SCRM 112 so they may be accessed during the accelerated secure boot process. This way, the accelerated secure boot process is enabled and has sufficient starting information to be executed on the next restart.

At step 406, prior to executing a current version of the software unit installed on the device, integrity of the current version is checked against the baselined version by first identifying the portion of the baselined version used to generate the vehicle/device signature, and determining a current signature for a same portion of the current version as the portion of the baseline version used to generate the vehicle/device signature. For example, accelerated secure boot begins by accessing the SCRM 112 to retrieve the vehicle/device signature 124 and the PRNG seed 122. The portion of the current version is selected to include a subset of all elements included in the current version as a corresponding subset of all elements included in the portion of the baselined version. Identifying the subset of all elements included in the portion of the baselined version to be selected for the current version can be performed using a PRNG, which may execute on the device or be accessible from the device. An output from the PRNG may be used for obtaining an encoded bit or byte map to the portion of the baselined version identified previously based on the PRNG seed 122 input to a PRNG that executes on the device. From determining the same elements of the subset, the vehicle/device signature 124 may be derived again to be used as the current signature, which when compared to the SCRM 112 stored version, is used to check integrity of the entire software unit 118 without having to individually check every data or instruction fragment during each accelerated secure boot

At 408, the subset of elements used to generate the vehicle/device signature are identified. For example, the PRNG seed 122 is input to a PRNG that outputs an elementwise-map identifying fragments of the current version of the software unit to be checked. Only a fraction of the current version of the software unit is used to confirm the integrity of the entire software unit since the baselined version is installed. For instance, the portion of the baselined version used to generate the vehicle/device signature 124 may include a small percentage (e.g., less than half) of the data and instructions included in the all the data and instructions of the baselined version. The same portion of the data and instructions included in the current version is derived from obtaining a map to that portion from the PRNG. The PRNG seed 122 may be used similar to a key, to cause the PRNG to unlock the subset of individual bytes or bits to be evaluated in generating the vehicle/device signature to compare to the vehicle/device signature 124 maintained from the baseline.

At 410, a current signature is determined based on applying a cryptographic algorithm to the elements of the software unit identified at step 408.

At 412, the vehicle/device signature obtained from the SCRM 112 at 406 is compared to the current signature determined at 410. For example, differences between the vehicle/device signature and the current signature can be identified to determine whether the current signature corresponds to the vehicle/device signature as a condition for determining when to execute, when to refrain from executing or cease executing, or when to prevent execution of the software unit given any dissimilarities identified between the two signatures.

At 414, if the signatures match and the software unit is deemed trustworthy at 422, the software unit may execute. For example, when the current signature matches the vehicle/device signature, the current version of the software unit is executed on the device. Otherwise, the device refrains from executing the software unit when the current signature is different than the vehicle/device signature. Then, during the next reboot, unless the baseline of the software unit is changed (e.g., a new version installation, a software update, a patch), at 402, the accelerated secure boot 406 is repeated so that vehicle startup times are minimized.

At 416, an optional step of changing the secret information preserved between accelerated secure boots to prevent reuse in the event of a security breach. This occurs outside the accelerated boot and may be performed as a background task. One way to increase security of the accelerated secure boot is to increment or change the PRNG seed input each time so that the same fragments of a software unit are not checked every time. This may make the accelerated secure boot process more secure and difficult to hack because the PRNG seed, and the vehicle/device signature, even if discoverable, may be forced to change to prevent their reuse during a subsequent accelerated secure boot cycle. For instance, the seed value maintained in the secure portion of memory can be changed after executing the current version of the software unit. After changing the seed value, a new vehicle/device signature may be determined for the software 118 using that new seed value, which can be maintained as the vehicle/device signature to be used for a next accelerated boot.

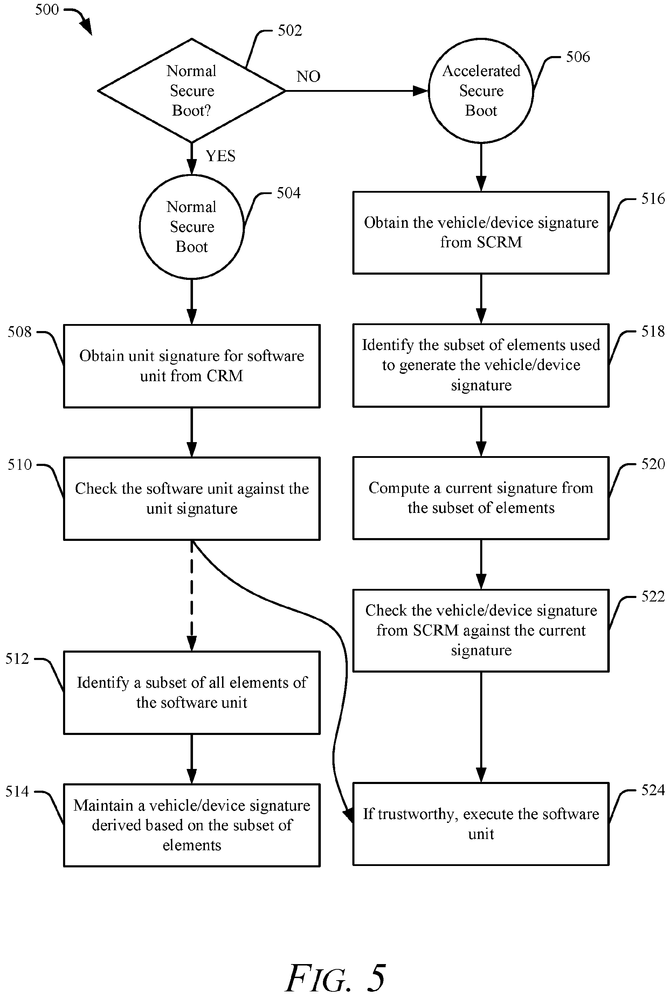

FIG. 5 illustrates a flow chart of another process 500 for performing accelerated secure boot for embedded controllers, in accordance with techniques of this disclosure. The process 500 may be performed by the startup code 114, the bootloader 116, the software 118, or a combination thereof, e.g., when executed by the processor 108 of the microcontroller 106. The steps of the process 500 may be repeated, rearranged, omitted, or otherwise modified depending on application. For ease of description, the process 500 is performed in the context of elements of FIGS. 1, 2-1, 2-2, 3-1, and 3-2. For ease of description, the process 500 is described in the context of actions performed by the bootloader 116 to verify the software 118.

At 502, whether to execute a normal secure boot 404 or an accelerated secure boot 406 of the software 118 is determined. For example, if startup time is not an issue, a normal secure boot process 504 is executed. Otherwise, a faster boot time is desired, an accelerated secure boot process 506 is executed. The accelerated secure boot process 506 may be conditioned, however, on execution of steps 512 and 514, which may be performed after a normal secure boot 504 as illustrated, or optionally, at any time a software unit is baselined in a system.

At 508, the normal secure boot process at 504 begins by obtaining a unit signature 120-1/120-2 for the software 118 being checked. The unit signature may be maintained in the CRM 110 and is applied to the software unit when packaged or compiled.

At 510, the software 118 is checked against the unit signature. For example, each byte or element of the software 118 is evaluated and used to produce a comparative signature for the software 118 that may be compared against the unit signature applied from the trusted source.

If the signatures match and the software 118 is deemed trustworthy at 510, the software unit may execute, at 524.

At 512, the process 500 may include identifying a subset of all elements of the software unit. A vehicle/device signature 124 may be derived based on the subset identified at 512. For example, to generate the vehicle/device signature 124, the bootloader 116 may execute an AES algorithm using the elements of the subset identified at 512 as input to generate a MAC. This way, at 506 and steps that follow, from determining the same elements of the subset and applying the same AES algorithm, the vehicle/device signature 124 may be derived again and compared to the MAC stored in the SCRM 112 to check integrity of the entire software 118, during each accelerated secure boot.

At 514, the vehicle/device signature is maintained securely (e.g., at the SCRM 112). Also maintained in the SCRM 112 is a PRNG seed for use in deriving which portions of the software unit to check during the accelerated secure boot processes. This way, the accelerated secure boot process 506 is enabled and has sufficient starting information to be executed on the next restart.

At 516, after a determination at 502 that an accelerated secure boot is to occur, the accelerated secure boot process 506 is performed. Rather than checking the unit signature applied to the software unit, as is done during the normal secure boot 504, at 516, the vehicle/device signature generated at 512 is retrieved from the SCRM 112. Also obtained from the SCRM 112 is any other information necessary (e.g., a PRNG seed) to check the vehicle/device signature against a signature determined during the accelerated boot process.

At 518, the subset of elements used to generate the vehicle/device signature are identified. For example, the PRNG seed 122 is input to a PRNG that outputs an elementwise-map identifying fragments of the software unit to be checked. Unlike in the normal secure boot 504, only a fraction of the software unit is used to confirm the integrity of the entire software unit. The PRNG seed 122 may be used as a cipher that configures the PRNG to specify individual bytes or bits to be checked in generating a comparison vehicle/device signature.

At 520, a current signature is determined based on applying a cryptographic algorithm to the elements of the software unit identified at step 518.

At 522, the vehicle/device signature obtained from the SCRM 112 at 516 is compared to the current signature determined at 520. For example, any dissimilarities between the two signatures are identified to determine whether the two signatures are the same.

At 525, if the signatures match and the software unit is deemed trustworthy at 522, the software unit may execute. The accelerated secure boot 506 may be repeated so that vehicle startup times are minimized.

While various embodiments of the disclosure are described in the foregoing description and shown in the drawings, it is to be understood that this disclosure is not limited thereto but may be variously embodied to practice within the scope of the following claims.

## Claims

1. A method (400) comprising:
generating (402) a vehicle/device signature (124) based on a portion of a baselined version of a software unit installed on a device (104) of a vehicle (102), wherein the portion of the baselined version includes a subset of all elements of the software unit (118);
prior to executing a current version of the software unit (118) installed on the device, checking integrity of the current version by:
identifying (408) the portion of the baselined version used to generate the vehicle/device signature (124); and
determining (410) a current signature for a portion of the current version of the software unit (118) corresponding to the portion of the baseline version used to generate the vehicle/device signature (124), wherein the portion of the current version includes a corresponding subset of all elements of the software unit (118) to the portion of the baselined version; and
executing (414) the software unit (118) on the device (104) when the current signature matches the vehicle/device signature (124), wherein the method further is **characterized by**:
selecting the subset of all elements included in the portion of the baselined version by inputting a seed value (122) to a pseudo random number generator to produce an encoded bit or byte map for the portion of the baselined version from the pseudo random number generator; and,
selecting the subset of all elements included in the portion of the current version by inputting the same seed value (122) to the random number generator to produce an encoded bit or byte map for the portion of the current version from the pseudo random number generator.

2. The method (400) of any preceding claim, further comprising:
refraining from executing the software unit (118) on the device (104) when the current signature is different than the vehicle/device signature (124).

3. The method (400) of claim 1, further comprising:
maintaining (404) the vehicle/device signature (124) and the seed value in a secure portion of memory (112), the secure portion (112) being isolated from other memory portions where the baselined version or the current version are maintained.

4. The method (400) of claim 3,
wherein the secure portion of memory (112) comprises non-volatile memory of the device (104) or non-volatile memory of the vehicle (102).

5. The method (400) of claim 3 or 4, further comprising:
changing the seed value (122) maintained in the secure portion of memory (112) after executing the software unit (118); and
after changing the seed value (122), using the seed value (122) to maintain (514) a new device/vehicle signature (124) for the current version in the secure portion of memory (122).

6. The method (400) of any preceding claim, further comprising:
executing the pseudo random number generator on the device (104).

7. The method (400) of any preceding claim, wherein:
the portion of the baselined version comprises a baselined elementwise-map of fragments to only some data and instructions of the software unit (118) loaded on the device (104) for the baselined version; and
the portion of the current version comprises a current elementwise-map of fragments to corresponding data and instructions of the software unit (118) loaded on the device (!04) for the current version as the data and instructions for the baselined version.

8. The method (400) of any preceding claim, further comprising:
comparing the vehicle/device signature (124) with the current signature to determine whether the current signature corresponds to the vehicle/device signature (124).

9. The method (400) of any preceding claim,
wherein the portion of the baselined version and the portion of the current version each include only some of all data and instructions for the software unit (118).

10. The method (400) of any preceding claim, further comprising:
executing a boot loader (116) configured to determine the current signature and prevent or cause the execution of the current version based on whether the vehicle/device signature (124) matches the current signature.

11. A system comprising at least one processor (108) configured to perform the method of any preceding claim.

12. The system of claim 11, wherein the system comprises a vehicle (102) with a device (104) that includes the at least one processor (108) .

13. A computer-readable storage media comprising instructions, that, when executed, cause at least one processor (108) to perform the method of any preceding claim.

## Patentansprüche

1. Verfahren (400) umfassend:
Erzeugen (402) einer Fahrzeug-/Gerätesignatur (124) basierend auf einem Teil einer Baseline-Version einer auf einem Gerät (104) eines Fahrzeugs (102) installierten Softwareeinheit, wobei der Teil der Baseline-Version eine Teilmenge aller Elemente der Softwareeinheit (118) einschließt;
vor dem Ausführen einer aktuellen Version der auf dem Gerät installierten Softwareeinheit (118) Überprüfen der Vollständigkeit der aktuellen Version durch:
Identifizieren (408) des Teils der Baseline-Version, der zum Erzeugen der Fahrzeug-/Gerätesignatur (124) verwendet wurde; und
Bestimmen (410) einer aktuellen Signatur für einen Teil der aktuellen Version der Softwareeinheit (118), der dem Teil der Baseline-Version entspricht, der zum Erzeugen der Fahrzeug-/Gerätesignatur (124) verwendet wurde, wobei der Teil der aktuellen Version eine Teilmenge aller Elemente der Softwareeinheit (118) einschließt, die dem Teil der Baseline-Version entspricht; und
Ausführen (414) der Softwareeinheit (118) auf dem Gerät (104), wenn die aktuelle Signatur mit der Fahrzeug-/Gerätesignatur (124) übereinstimmt, wobei das Verfahren ferner **gekennzeichnet ist durch**:
Auswählen der Teilmenge aller Elemente, die in dem Teil der Baseline-Version enthalten sind, **durch** Eingeben eines Startwerts (122) in einen Pseudozufallszahlengenerator, um mittels des Pseudozufallszahlengenerators eine kodierte Bit- oder Byte-Map für den Teil der Baseline-Version zu erzeugen; und,
Auswählen der Teilmenge aller Elemente, die in dem Teil der Baseline-Version enthalten sind, **durch** Eingeben eines Startwerts (122) in einen Pseudozufallszahlengenerator, um mittels des Pseudozufallszahlengenerators eine codierte Bit- oder Byte-Map für den Teil der Baseline-Version zu erzeugen.

2. Verfahren (400) nach einem der vorstehenden Ansprüche, ferner umfassend:
Unterlassen einer Ausführung der Softwareeinheit (118) auf dem Gerät (104), wenn sich die aktuelle Signatur von der Fahrzeug-/Gerätesignatur (124) unterscheidet.

3. Verfahren (400) nach Anspruch 1, ferner umfassend:
Ablegen (404) der Fahrzeug-/Gerätesignatur (124) und des Startwerts in einem sicheren Speicherbereich (112), wobei der sichere Speicherbereich (112) von anderen Speicherbereichen isoliert ist, in denen die Baseline-Version oder die aktuelle Version abgelegt sind.

4. Verfahren (400) nach Anspruch 3,
wobei der sichere Speicherbereich (112) einen nichtflüchtigen Speicher des Geräts (104) oder einen nichtflüchtigen Speicher des Fahrzeugs (102) umfasst.

5. Verfahren (400) nach Anspruch 3 oder 4, ferner umfassend:
Ändern des im sicheren Speicherbereich (112) gespeicherten Startwerts (122) nach Ausführung der Softwareeinheit (118); und
nach dem Ändern des Startwerts (122), Verwenden des Startwerts (122) zum Speichern (514) einer neuen Fahrzeug-/Gerätesignatur (124) für die aktuelle Version in dem sicheren Speicherbereich (122).

6. Verfahren (400) nach einem der vorstehenden Ansprüche, ferner umfassend: Ausführen des Pseudozufallszahlengenerators auf dem Gerät (104).

7. Verfahren (400) nach einem der vorstehenden Ansprüche, wobei:
der Teil der Baseline-Version eine elementweise Baseline-Karte von Fragmenten für nur einige Daten und Anweisungen der auf dem Gerät (104) für die Baseline-Version geladenen Softwareeinheit (118) umfasst; und
der Teil der aktuellen Version eine aktuelle elementweise Karte von Fragmenten zu entsprechenden Daten und Anweisungen der auf dem Gerät (104) für die aktuelle Version geladenen Softwareeinheit (118) als die Daten und Befehle für die Baseline-Version umfasst.

8. Verfahren (400) nach einem der vorstehenden Ansprüche, ferner umfassend:
Vergleichen der Fahrzeug-/Gerätesignatur (124) mit der aktuellen Signatur, um zu bestimmen, ob die aktuelle Signatur der Fahrzeug-/Gerätesignatur (124) entspricht.

9. Verfahren (400) nach einem der vorstehenden Ansprüche,
wobei der Teil der Baseline-Version und der Teil der aktuellen Version jeweils nur einige der gesamten Daten und Anweisungen für die Softwareeinheit (118) einschließen.

10. Verfahren (400) nach einem der vorstehenden Ansprüche, ferner umfassend:
Ausführen eines Bootloaders (116), der so konfiguriert ist, dass er die aktuelle Signatur bestimmt und die Ausführung der aktuellen Version verhindert oder veranlasst, abhängig davon, ob die Fahrzeug-/Gerätesignatur (124) mit der aktuellen Signatur übereinstimmt.

11. System, umfassend mindestens einen Prozessor (108), der konfiguriert ist, das Verfahren nach einem der vorstehenden Ansprüche auszuführen.

12. System nach Anspruch 11, wobei das System ein Fahrzeug (102) mit einem Gerät (104) umfasst, das den mindestens einen Prozessor (108) einschließt.

13. Computerlesbares Speichermedium, das Anweisungen umfasst, die, wenn sie ausgeführt werden, mindestens einen Prozessor (108) veranlassen, das Verfahren nach einem der vorstehenden Ansprüche auszuführen.

## Revendications

1. Procédé (400) comprenant :
la génération (402) d'une signature de véhicule/dispositif (124) basée sur une partie d'une version mise en référence d'une unité logicielle installée sur un dispositif (104) d'un véhicule (102), dans lequel la partie de la version mise en référence comporte un sous-ensemble de tous les éléments de l'unité logicielle (118) ;
avant d'exécuter une version actuelle de l'unité logicielle (118) installée sur le dispositif, la vérification de l'intégrité de la version actuelle par :
l'identification (408) de la partie de la version mise en référence utilisée pour générer la signature de véhicule/dispositif (124) ; et
la détermination (410) d'une signature actuelle destinée à une partie de la version actuelle de l'unité logicielle (118) correspondant à la partie de la version de référence utilisée pour générer la signature véhicule/dispositif (124), dans lequel la partie de la version actuelle comporte un sous-ensemble correspondant de tous les éléments de l'unité logicielle (118) à la partie de la version mise en référence ; et
l'exécution (414) de l'unité logicielle (118) sur le dispositif (104) lorsque la signature actuelle correspond à la signature de véhicule/dispositif (124), dans lequel le procédé est en outre **caractérisé par** :
la sélection du sous-ensemble de tous les éléments inclus dans la partie de la version mise en référence en entrant une valeur de départ (122) dans un générateur de nombres pseudo-aléatoires afin de produire une carte de bits ou d'octets codée destinée à la partie de la version mise en référence à partir du générateur de nombres pseudo-aléatoires ;
la sélection du sous-ensemble de tous les éléments inclus dans la partie de la version actuelle en entrant la même valeur de départ (122) dans le générateur de nombres aléatoires afin de produire une carte de bits ou d'octets codée destinée à la partie de la version actuelle à partir du générateur de nombres pseudo-aléatoires.

2. Procédé (400) selon une quelconque revendication précédente, comprenant en outre :
l'abstention de l'exécution de l'unité logicielle (118) sur le dispositif (104) lorsque la signature actuelle est différente de la signature de véhicule/dispositif (124).

3. Procédé (400) selon la revendication 1, comprenant en outre :
le maintien (404) de la signature de véhicule/dispositif (124) et la valeur de départ dans une partie sécurisée de la mémoire (112), la partie sécurisée (112) étant isolée des autres parties de la mémoire où la version mise en référence ou la version actuelle sont conservées.

4. Procédé (400) selon la revendication 3,
dans lequel la partie sécurisée de la mémoire (112) comprend une mémoire non volatile du dispositif (104) ou une mémoire non volatile du véhicule (102).

5. Procédé (400) selon la revendication 3 ou 4 comprenant en outre :
la modification de la valeur de départ (122) maintenue dans la partie sécurisée de la mémoire (112) après exécution de l'unité logicielle (118) ; et
après modification de la valeur de départ (122), l'utilisation de la valeur de départ (122) pour maintenir (514) une nouvelle signature de dispositif/véhicule (124) destinée à la version actuelle dans la partie sécurisée de la mémoire (122).

6. Procédé (400) selon une quelconque revendication précédente, comprenant en outre : l'exécution du générateur de nombres pseudo-aléatoires sur le dispositif (104).

7. Procédé selon (400) selon une quelconque revendication précédente, dans lequel :
la partie de la version mise en référence comprend une carte par élément mise en référence des fragments vers seulement certaines données et instructions de l'unité logicielle (118) chargée sur le dispositif (104) destinées à la version mise en référence ; et
la partie de la version actuelle comprend une carte par élément actuelle des fragments vers les données et des instructions correspondantes de l'unité logicielle (118) chargée sur le dispositif (104) destinées à la version actuelle en tant que données et des instructions destinées à la version mise en référence.

8. Procédé (400) selon une quelconque revendication précédente, comprenant en outre :
la comparaison de la signature de véhicule/dispositif (124) avec la signature actuelle pour déterminer si la signature actuelle correspond à la signature de véhicule/dispositif (124).

9. Procédé selon (400) selon une quelconque revendication précédente,
dans lequel la partie de la version mise en référence et la partie de la version actuelle comportent chacune seulement certaines parmi toutes les données et instructions destinées à l'unité logicielle (118).

10. Procédé (400) selon une quelconque revendication précédente, comprenant en outre :
l'exécution d'un chargeur de démarrage (116) conçu pour déterminer la signature actuelle et empêcher ou amener l'exécution de la version actuelle selon que la signature de véhicule/dispositif (124) correspond ou non à la signature actuelle.

11. Système comprenant au moins un processeur (108) configuré pour effectuer le procédé selon une quelconque revendication précédente.

12. Système selon la revendication 11, dans lequel le système comprend un véhicule (102) doté d'un dispositif (104) qui comporte ledit au moins un processeur (108).

13. Support de mémoire lisible par ordinateur comprenant des instructions qui, lorsqu'elles sont exécutées, amènent au moins un processeur (108) à effectuer le procédé selon une quelconque revendication précédente.
